# EUROPEAN PATENT APPLICATION

(11) **EP 4 311 694 A1**
(43) Date of publication of application: **31.01.2024**
(21) Application number: 23186423.2
(22) Date of filing: 19.07.2023
(51) Int. Cl.: B60C 19/00, B60C 5/00

(54) **PNEUMATIC TIRE**

(30) Priority: 29.07.2022 JP 2022121202
(71) Applicant: Sumitomo Rubber Industries, Ltd., Kobe-shi, Hyogo-ken 651-0072 (JP)
(72) Inventor: MATSUNAMI, Sho, Kobe-shi, Hyogo 651-0072 (JP); YUKAWA, Naoki, Kobe-shi, Hyogo 651-0072 (JP); SATO, Takuya, Kobe-shi, Hyogo 651-0072 (JP)
(74) Representative: Manitz Finsterwald Patent- und Rechtsanwaltspartnerschaft mbB

(57) **Abstract**

Provided is a pneumatic tire that can have improved high speed durability. The pneumatic tire is a pneumatic tire 1 having a tread portion 2. A sponge-like sound absorbing member 9 is provided on an inner surface 2b of the tread portion 2. The sound absorbing member 9 has an outer peripheral surface 9a facing outward in a tire radial direction. A plurality of grooves 10, and a plurality of land portions 11 separated from each other by the plurality of grooves 10, are formed in the outer peripheral surface 9a. Each of the plurality of land portions 11 is firmly attached to the inner surface 2b continuously along a longitudinal direction of the groove 10.

## Description

### BACKGROUND OF THE INVENTION

### Field of the Invention

The present invention relates to a pneumatic tire having a tread portion.

### Background Art

There has conventionally been a known pneumatic tire in which a sound absorbing part is provided on the inner surface of a tread portion in order to reduce road noise. For example, Japanese Laid-Open Patent Publication No. 2019-108034 proposes a pneumatic tire in which protrusions and recesses are formed on the inward surface in the tire radial direction of a sound absorbing part to further reduce road noise.

### SUMMARY OF THE INVENTION

According to the inventors' study, the heat generated by the tread of pneumatic tires at high speeds may cause the sound absorbers to store heat and affect the tread. Especially at high speeds, this effect may be significant.

The present invention has been made in view of the above circumstances, and a major object of the present invention is to provide a pneumatic tire in which a sponge-like sound absorbing member is basically provided on an inner surface of a tread portion and which can have improved high speed durability.

The present invention is directed to a pneumatic tire including a tread portion, wherein: a sponge-like sound absorbing member is provided on an inner surface of the tread portion; the sound absorbing member has an outer peripheral surface facing outward in a tire radial direction; a plurality of grooves, and a plurality of land portions separated from each other by the plurality of grooves, are formed in the outer peripheral surface; and each of the plurality of land portions is firmly attached to the inner surface continuously along a longitudinal direction of the groove.

As a result of having the above-described configuration, the pneumatic tire according to the present invention can have improved high speed durability.

### BRIEF DESCRIPTION OF THE DRAWINGS

FIG. 1 is a cross-sectional view illustrating an embodiment of the pneumatic tire according to the present invention;
FIG. 2 is a partial perspective view of a sound absorbing member;
FIG. 3 is an enlarged cross-sectional view perpendicular to a longitudinal direction of a groove;
FIG. 4 is a development of the sound absorbing member according to the embodiment as viewed from above an outer peripheral surface thereof;
FIG. 5 is a partial cross-sectional view of the pneumatic tire:
FIG. 6 is a development of a sound absorbing member according to another embodiment as viewed from above an outer peripheral surface thereof;
FIG. 7 is a cross-sectional view of a sound absorbing member according to still another embodiment;
FIG. 8 is a cross-sectional view of a sound absorbing member according to still another embodiment; and
FIG. 9 is a cross-sectional view of a sound absorbing member according to still another embodiment.

### DETAILED DESCRIPTION

Hereinafter, an embodiment of the present invention will be described in detail with reference to the drawings.

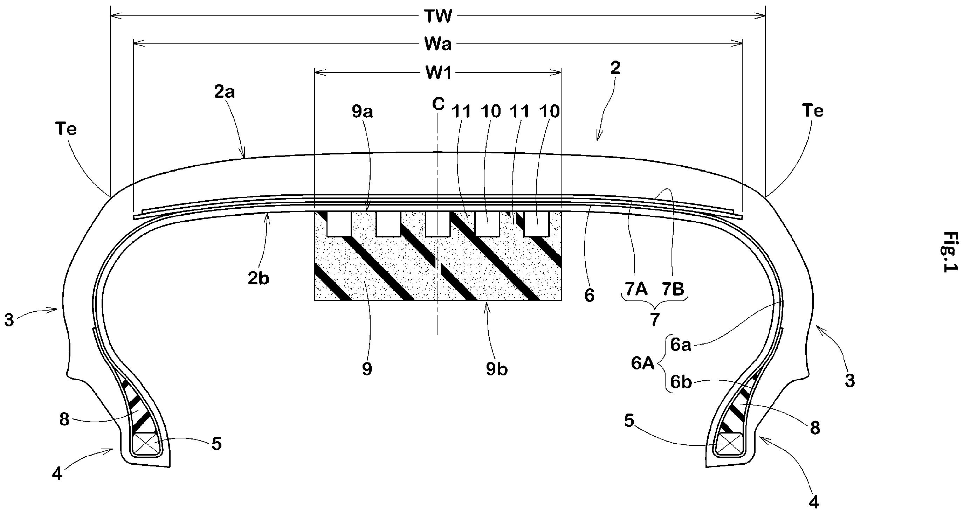

FIG. 1 is a tire meridian cross-sectional view of a pneumatic tire 1 according to the present embodiment in a standardized state, including the rotation axis of the pneumatic tire 1. Here, the "standardized state" is a state where: the pneumatic tire 1 is fitted on a standardized rim and adjusted to a standardized internal pressure; and no load is applied to the pneumatic tire 1. Hereinafter, unless otherwise specified, dimensions and the like of components of the pneumatic tire 1 are values measured in the standardized state.

If there is a standard system including a standard on which the pneumatic tire 1 is based, the "standardized rim" is a rim that is defined for each tire by the standard, and is, for example, the "standard rim" in the JATMA standard, the "Design Rim" in the TRA standard, or the "Measuring Rim" in the ETRTO standard. If there is no standard system including a standard on which the pneumatic tire 1 is based, the "standardized rim" is a rim having the smallest rim diameter and having the smallest rim width, among rims to which the pneumatic tire 1 can be fitted and which do not cause air leakage.

If there is a standard system including a standard on which the pneumatic tire 1 is based, the "standardized internal pressure" is an air pressure that is defined for each tire by each standard, and is the "maximum air pressure" in the JATMA standard, the maximum value indicated in the table "TIRE LOAD LIMITS AT VARIOUS COLD INFLATION PRESSURES" in the TRA standard, or the "INFLATION PRESSURE" in the ETRTO standard. If there is no standard system including a standard on which the pneumatic tire 1 is based, the "standardized internal pressure" is an air pressure that is defined for each tire by the manufacturer or the like.

As shown in FIG. 1, the pneumatic tire 1 according to the present embodiment has a tread portion 2 that extends annularly, a pair of sidewall portions 3 that are provided on both sides in the tire axial direction of the tread portion 2, and bead portions 4 that are provided inward of the respective sidewall portions 3 in the tire radial direction.

The tread portion 2 of the present embodiment has an outer surface 2a that forms a ground-contact surface that is brought into contact with a road surface during running. The sidewall portions 3 preferably extend inward in the tire radial direction from both sides in the tire axial direction of the tread portion 2. For example, a buttress portion is provided between the tread portion 2 and each sidewall portion 3. Each bead portion 4 includes, for example, a portion that is brought into contact with a rim when the tire 1 is fitted onto the rim. The bead portion 4 of the present embodiment has a bead core 5 that extends annularly. The bead core 5 is formed of, for example, a steel wire.

The pneumatic tire 1 of the present embodiment has a carcass 6 that extends from the tread portion 2 to the pair of bead portions 4 through the pair of sidewall portions 3, and a belt layer 7 that is provided outward of the carcass 6 in the tire radial direction in the tread portion 2. The pneumatic tire 1 may have, for example, a band layer (not shown) that is provided outward of the belt layer 7 in the tire radial direction.

The carcass 6 preferably extends toroidally between the bead cores 5 of the pair of bead portions 4 through the tread portion 2 and the pair of sidewall portions 3. The carcass 6 includes at least one (e.g., one) carcass ply 6A. The carcass ply 6A of the present embodiment extends on and between the pair of bead portions 4 through the tread portion 2 and the pair of sidewall portions 3.

The carcass ply 6A includes, for example, a body portion 6a that extends from the tread portion 2 to the bead core 5 of the bead portion 4 through the sidewall portion 3, and a turned-up portion 6b that is connected to the body portion 6a and turned up around the bead core 5 from the inside to the outside in the tire axial direction. Such a carcass 6 enhances the stiffness of the bead portion 4 and serves to improve the durability of the pneumatic tire 1.

The belt layer 7 includes one or more (e.g., two) belt plies 7A and 7B. The two belt plies 7A and 7B include, for example, a first belt ply 7A located on the inner side in the tire radial direction, and a second belt ply 7B located outward of the first belt ply 7A in the tire radial direction. Such a belt layer 7 enhances the stiffness of the tread portion 2 and serves to improve the durability of the pneumatic tire 1.

The pneumatic tire 1 has, for example, bead apexes 8 that are provided in the bead portions 4 and extend outward in the tire radial direction. For example, each bead apex 8 extends outward in the tire radial direction from the bead core 5, between the body portion 6a and the turned-up portion 6b of the carcass 6. Such a bead apex 8 enhances the stiffness of the bead portion 4 and serves to improve the durability of the pneumatic tire 1.

The pneumatic tire 1 of the present embodiment has a sponge-like sound absorbing member 9 that is provided on an inner surface 2b in the tire radial direction of the tread portion 2. The sound absorbing member 9 preferably has an outer peripheral surface 9a that faces outward in the tire radial direction, and an inner peripheral surface 9b that faces inward in the tire radial direction. The sound absorbing member 9 of the present embodiment is firmly attached at the outer peripheral surface 9a to the inner surface 2b of the tread portion 2.

Such a sound absorbing member 9 can reduce the road noise of the pneumatic tire 1. Here, the sound absorbing member 9 may be firmly attached to the inner surface 2b by a sticky agent, an adhesive agent, a double-sided tape, or the like, or alternatively, may be fixed to the inner surface 2b by a sealant or the like applied to the inner surface 2b.

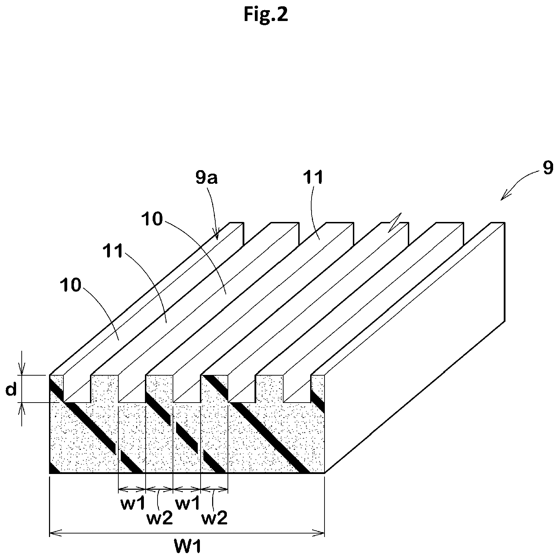

FIG. 2 is a partial perspective view of the sound absorbing member 9. As shown in FIG. 1 and FIG. 2, a plurality of grooves 10, and a plurality of land portions 11a separated from each other by the plurality of grooves 10, are formed in the outer peripheral surface 9a of the sound absorbing member 9 of the present embodiment. In the present embodiment, the plurality of land portions 11 are each firmly attached to the inner surface 2b of the tread portion 2 continuously along a longitudinal direction of the groove 10.

Spaces are formed between such a sound absorbing member 9 and the tread portion 2 by the grooves 10. Therefore, when heat is generated by the tread portion 2 during high speed running, heat accumulation by the sound absorbing member 9 can be reduced. Therefore, the pneumatic tire 1 of the present embodiment can have improved high speed durability. In addition, when the pneumatic tire 1 has a puncture, the sound absorbing member 9 allows a puncture repair material to be fed to a puncture area through the groove 10, resulting in efficient puncture repair.

In a more preferable embodiment, the attached area of the plurality of land portions 11 to the inner surface 2b is 25% to 50% of the projected area of the sound absorbing member 9 onto the inner surface 2b. Preferably from 27.5% to 47.5%, more preferably from 30% to 45%. As the attached area is not less than 25% of the projected area, then even when the tread portion 2 becomes significantly deformed during high speed running, the coming off of the sound absorbing member 9 can be suppressed, leading to an improvement in the high speed durability of the pneumatic tire 1. As the attached area is not greater than 50% of the projected area, the heat accumulation of the sound absorbing member 9 during high speed running can be reliably reduced, leading to an improvement in the high speed durability of the pneumatic tire 1.

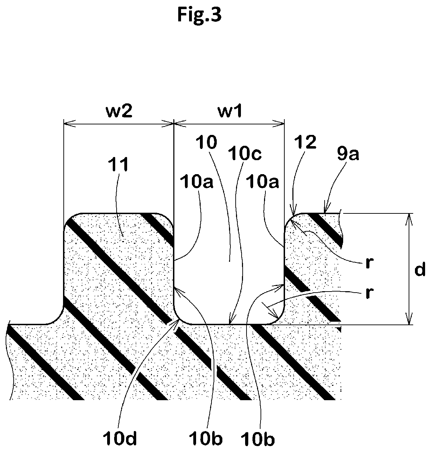

FIG. 3 is an enlarged cross-sectional view perpendicular to the longitudinal direction of the groove 10. As shown in FIG. 2 and FIG. 3, the plurality of grooves 10 preferably have the same cross-sectional shape in a cross-section thereof perpendicular to the longitudinal direction of the groove 10. That is, the plurality of grooves 10 have groove widths w1 which are equal to each other. Such a sound absorbing member 9 can reduce non-uniformity in a direction perpendicular to the longitudinal direction, and therefore can improve the noise performance of the pneumatic tire 1 in a well-balanced manner.

The plurality of land portions 11 of the present embodiment are firmly attached to the inner surface 2b of the tread portion 2 over widths w2 which are equal to each other, in a cross-section thereof perpendicular to the longitudinal direction of the groove 10 (as shown in FIG. 1). The width w2 of each land portion 11 is preferably equal to the groove width w1 of each groove 10 at the outer peripheral surface 9a. In the case of such a sound absorbing member 9, when a single material is cut along the outer peripheral surface 9a and thereby divided into two portions, both of the two portions can be used as the sound absorbing member 9, resulting in a reduction in manufacturing loss.

The groove width w1 of each groove 10 is preferably 3 to 10 mm at the outer peripheral surface 9a. As the groove width w1 is not less than 3 mm, a space is reliably formed between the groove 10 and the inner surface 2b. Therefore, heat accumulation can be reduced, and efficiency of puncture repair can be improved. As the groove width w1 is not greater than 10 mm, a force applied to each land portion 11 can be reduced during running, and therefore, the coming off of the sound absorbing member 9 can be suppressed.

Each groove 10 preferably has a groove depth d of 1 to 10 mm from the outer peripheral surface 9a. As the groove depth d is not less than 1 mm, a space is reliably formed between the groove 10 and the inner surface 2b, and therefore, heat accumulation can be reduced, and efficiency of puncture repair can be improved. From such a viewpoint, in the case where the means for firmly attaching the sound absorbing member 9 is a sticky agent or a double-sided tape, the groove depth d is preferably not less than 2 mm. In the case where the sound absorbing member 9 is firmly attached by a sealant, the groove depth d is preferably not less than 3 mm. As the groove depth d is not greater than 10 mm, a decrease in the strength of the land portions 11 due to the formation of the grooves 10 can be reduced, and therefore, the coming off of the sound absorbing member 9 can be suppressed.

As shown in FIG. 3, each groove 10 preferably has a pair of groove walls 10a. Each groove wall 10a of the present embodiment has a wall surface 10b that is perpendicular to the outer peripheral surface 9a. Such a groove 10 contributes to both of the attached area and strength.

Each groove 10 preferably has a bottom surface 10c that connects the pair of wall surfaces 10b. A chamfered portion 10d is formed at each of corner portions between the wall surfaces 10b and the bottom surface 10c of the present embodiment. The chamfered portion 10d is formed, for example, in an arc shape in a cross-section thereof perpendicular to the longitudinal direction of the groove 10. Such a groove 10 reduces a decrease in the strength of the land portion 11 and serves to suppress the coming off of the sound absorbing member 9.

A chamfered portion 12 is formed at each of corner portions between the wall surfaces 10b and the outer peripheral surface 9a of the present embodiment. The chamfered portion 12 is formed, for example, in an arc shape in a cross-section thereof perpendicular to the longitudinal direction of the groove 10. The chamfered portions 10d on the bottom surface 10c and the chamfered portions 12 on the outer peripheral surface 9a preferably have the same radius of curvature r. Such a land portion 11 maintains good strength and serves to suppress the coming off of the sound absorbing member 9.

The radius of curvature r of each of the chamfered portions 10d on the bottom surface 10c and the chamfered portions 12 on the outer peripheral surface 9a is preferably 0.5 to 2 mm. As the radius of curvature r is not less than 0.5 mm, the strength of the land portion 11 is maintained, and therefore, the coming off of the sound absorbing member 9 due to the deformation of the tread portion 2 during running can be suppressed. As the radius of curvature r is not greater than 2 mm, a decrease in the attached area of the sound absorbing member 9 can be reduced, leading to suppression of the coming off of the sound absorbing member 9.

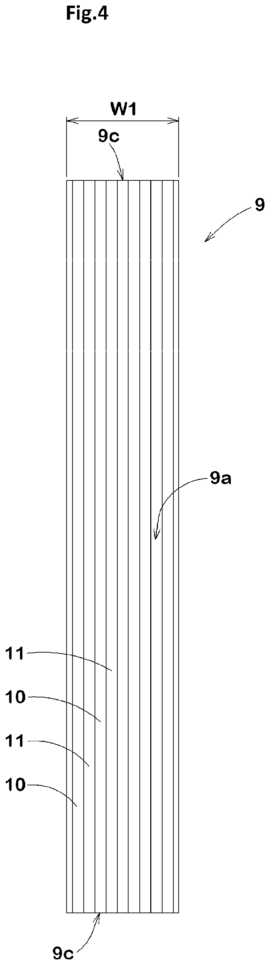

FIG. 4 is a development of the sound absorbing member 9 of the present embodiment as viewed from above the outer peripheral surface 9a. As shown in FIG. 4, each groove 10 of the present embodiment extends in parallel to the tire circumferential direction. The sound absorbing member 9 has, for example, a pair of end surfaces 9c in the tire circumferential direction. Each groove 10 is preferably open at the pair of end surfaces 9c. Such a sound absorbing member 9 has both of a preferable attached area and a preferable strength, and can reduce heat accumulation of the sound absorbing member 9 and improve efficiency of puncture repair in addition to suppression of the coming off of the sound absorbing member 9.

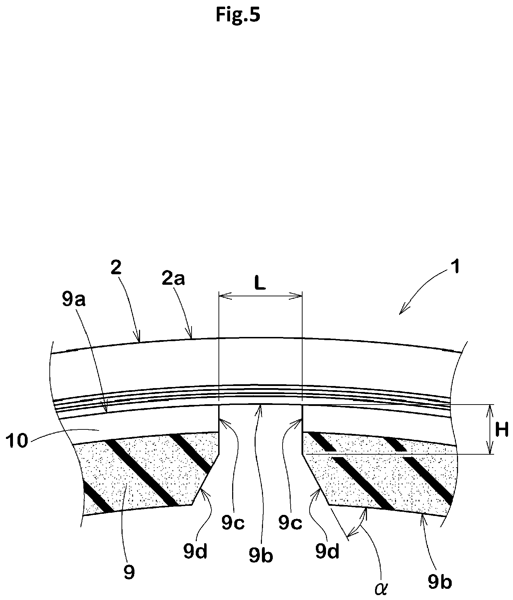

FIG. 5 is a partial cross-sectional view of the pneumatic tire 1 taken at a tire equator C. Here, as shown in FIG. 1, the tire equator C is located at the center position between tread ground-contact ends Te on both sides in the tire axial direction. The tread ground-contact ends Te are outermost ground-contact positions in the tire axial direction when a standardized load is applied to the pneumatic tire 1 in the standardized state and the tire 1 is brought into contact with a flat surface at a camber angle of 0°. In other words, a tread ground-contact width TW between the tread ground-contact ends Te is the maximum width of a ground-contact surface when a standardized load is applied to the pneumatic tire 1 in the standardized state.

If there is a standard system including a standard on which the pneumatic tire 1 is based, the "standardized load" is a load that is defined for each tire by each standard, and is the "maximum load capacity" in the JATMA standard, the maximum value indicated in the table "TIRE LOAD LIMITS AT VARIOUS COLD INFLATION PRESSURES" in the TRA standard, or the "LOAD CAPACITY" in the ETRTO standard. If there is no standard system including a standard on which the pneumatic tire 1 is based, the "standardized load" is a load that is defined for each tire by the manufacturer or the like.

As shown in FIG. 5, a space L is formed between the pair of end surfaces 9c of the sound absorbing member 9 firmly attached to the inner surface 2b of the pneumatic tire 1 of the present embodiment. Such a sound absorbing member 9 allows the puncture repair material to be fed from the end surface 9c of the groove 10, resulting in efficient puncture repair.

The space L between the end surfaces 9c is preferably 3 to 60 mm. As the space L is not less than 3 mm, the puncture repair material can be reliably fed from the end surface 9c of the groove 10. As the space L is not greater than 60 mm, non-uniformity in the tire circumferential direction can be reduced, leading to suppression of occurrence of vibrations, noise, and the like during high speed running.

At least one (in the present embodiment, both) of the pair of end surfaces 9c has a tapered surface 9d whose height in the tire radial direction gradually becomes smaller. The tapered surface 9d of the present embodiment is formed in a flat surface shape. The tapered surface 9d may, for example, be formed in an arc shape. The coming off of such a sound absorbing member 9 from the end surface 9c, at which stress is concentrated during running, can be suppressed, leading to an improvement in the high speed durability of the pneumatic tire 1.

The tapered surface 9d of the present embodiment is formed in a portion of the end surface 9c. The portion of the end surface 9c in which the tapered surface 9d is not formed preferably has a height H of 3 to 10 mm. In such a sound absorbing member 9, damage to a sharp portion of the end surface 9c can be reduced, leading to an improvement in efficiency of the work of firmly attaching the sound absorbing member 9 to the inner surface 2b of the tread portion 2. It should be noted that the tapered surface 9d may be formed throughout the end surface 9c, for example.

The tapered surface 9d is preferably inclined at angle α of 30 to 80° with respect to the inner peripheral surface 9b. As the angle α with respect to the inner peripheral surface 9b is not less than 30°, the effect of absorbing sound by the sound absorbing member 9 can be maintained at a satisfactory level. As the angle α with respect to the inner peripheral surface 9b is not greater than 80°, the effect of suppressing the coming off of the sound absorbing member 9 from the end surface 9c can be reliably achieved.

In the pneumatic tire 1 of the present embodiment, the single sound absorbing member 9 is firmly attached with the space L formed between the pair of end surfaces 9c in the tire circumferential direction. The pneumatic tire 1 of the present embodiment is not limited to such a mode. Alternatively, in the pneumatic tire 1, a plurality of sound absorbing members 9 may be firmly attached with spaces L formed in the tire circumferential direction. In that case, a space L is formed between the end surfaces 9c of adjacent sound absorbing members 9. For such a pneumatic tire 1, the quantity, shape, and the like of the sound absorbing members 9 can be selected, depending on the purpose.

As shown in FIG. 1, a width W1 in the tire axial direction of the sound absorbing member 9 is preferably smaller than a width Wa in the tire axial direction of the belt layer 7. With such a sound absorbing member 9, an excessive increase in the weight of the pneumatic tire 1 is suppressed, leading to an improvement in the handling stability of the pneumatic tire 1.

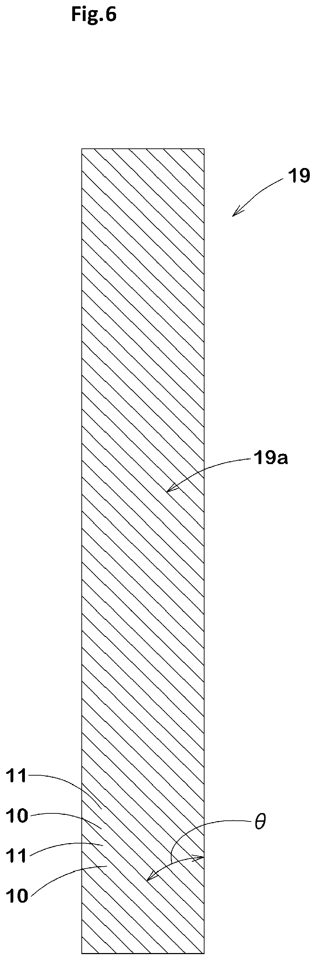

FIG. 6 is a development of a sound absorbing member 19 according to another embodiment as viewed from above an outer peripheral surface 19a thereof. As shown in FIG. 6, a plurality of grooves 10, and a plurality of land portions 11 separated from each other by the plurality of grooves 10, are formed in the outer peripheral surface 19a of the sound absorbing member 19 of the present embodiment, as in the above-described sound absorbing member 9. In the present embodiment as well, the plurality of land portions 11 are each firmly attached to the inner surface 2b of the tread portion 2 (shown in FIG. 1) continuously along a longitudinal direction of the groove 10.

Each groove 10 of the present embodiment extends at an angle θ of 1 to 90° with respect to the tire circumferential direction. In the case where the angle θ of the groove 10 is, for example, about 15 to 45°, the groove 10 effectively contributes to high speed durability. In the case where the angle θ of the groove 10 is close to 90°, the groove 10 effectively contributes to feeding of the puncture repair material. Therefore, the angle θ of the groove 10 is preferably 45 to 60°. Such a sound absorbing member 19 serves to achieve both high speed durability and efficiency of puncture repair.

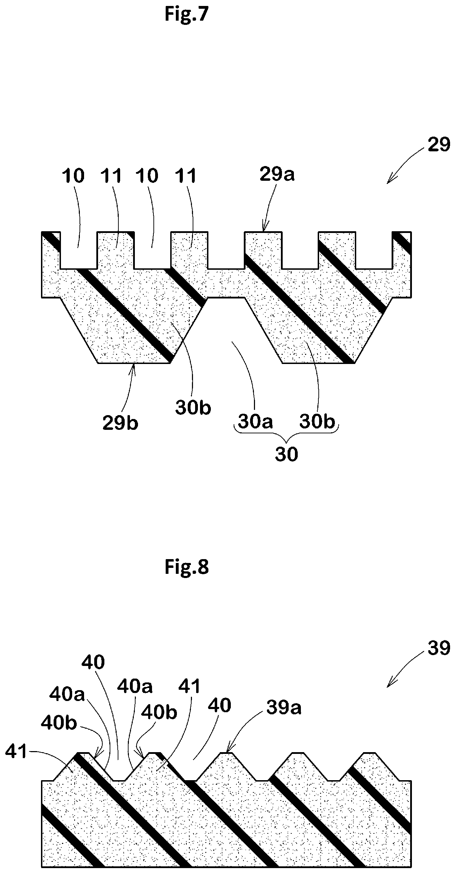

FIG. 7 is a cross-sectional view of a sound absorbing member 29 according to still another embodiment. As shown in FIG. 7, a plurality of grooves 10, and a plurality of land portions 11 separated from each other by the plurality of grooves 10, are formed in an outer peripheral surface 29a of the sound absorbing member 29 of the present embodiment, as in the above-described sound absorbing member 9. In the present embodiment as well, the plurality of land portions 11 are each firmly attached to the inner surface 2b of the tread portion 2 (shown in FIG. 1) continuously along a longitudinal direction of the groove 10.

The sound absorbing member 29 of the present embodiment has a protrusion-and-recess structure 30 formed in an inner peripheral surface 29b thereof. The protrusion-and-recess structure 30 includes, for example, recesses 30a and protrusions 30b. The protrusion-and-recess structure 30 is preferably formed independently of the shape of the grooves 10 in the outer peripheral surface 29a. The protrusion-and-recess structure 30 is not limited to the illustrated form, and may have any shape. The inner peripheral surface 29b of such a sound absorbing member 29 can have a shape advantageous to a reduction in road noise, resulting in a further improvement in noise performance.

FIG. 8 is a cross-sectional view of a sound absorbing member 39 according to still another embodiment. As shown in FIG. 8, a plurality of grooves 40, and a plurality of land portions 41 separated from each other by the plurality of grooves 40, are formed in an outer peripheral surface 39a of the sound absorbing member 39 of the present embodiment. In the present embodiment as well, the plurality of land portions 41 are each firmly attached to the inner surface 2b of the tread portion 2 (shown in FIG. 1) continuously along a longitudinal direction of the groove 40.

Each groove 40 of the present embodiment preferably has a pair of groove walls 40a. Each groove wall 40a of the present embodiment has a wall surface 40b inclined with respect to the outer peripheral surface 39a. Such a groove 40 can enhance the strength of the land portion 41, which is effective in the case where the sound absorbing member 39 may have a smaller attached area.

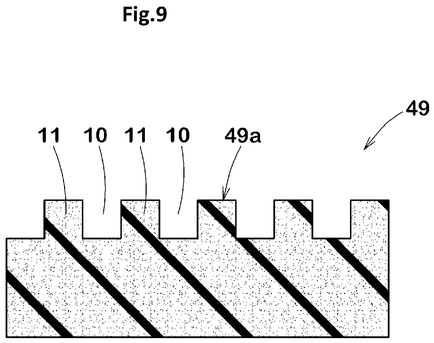

FIG. 9 is a cross-sectional view of a sound absorbing member 49 according to still another embodiment. As shown in FIG. 9, a plurality of grooves 10, and a plurality of land portions 11 separated from each other by the plurality of grooves 10, are formed in an outer peripheral surface 49a of the sound absorbing member 49 of the present embodiment, as in the above-described sound absorbing member 9. In the present embodiment as well, the plurality of land portions 11 are each firmly attached to the inner surface 2b of the tread portion 2 (shown in FIG. 1) continuously along a longitudinal direction of the groove 10.

The sound absorbing member 49 of the present embodiment is asymmetric in a width direction in a cross-section thereof perpendicular to the longitudinal direction of the groove 10. In the case of the sound absorbing member 49, when a single material is cut along the outer peripheral surface 49a and thereby divided into two portions, both of the two portions can be used as the sound absorbing members 49 having the same shape, resulting in a further reduction in manufacturing loss.

Although the particularly preferred embodiments of the present invention have been described in detail above, the present invention is not limited to the above-described embodiments, and various modifications can be made to implement the present invention.

### [Additional Note]

The present invention is as follows.

### [Present Invention 1]

A pneumatic tire including a tread portion, wherein
a sponge-like sound absorbing member is provided on an inner surface of the tread portion,
the sound absorbing member has an outer peripheral surface facing outward in a tire radial direction,
a plurality of grooves, and a plurality of land portions separated from each other by the plurality of grooves, are formed in the outer peripheral surface, and
each of the plurality of land portions is firmly attached to the inner surface continuously along a longitudinal direction of the groove.

### [Present Invention 2]

The pneumatic tire according to Present Invention 1, wherein an attached area of the plurality of land portions to the inner surface is 25% to 50% of a projected area of the sound absorbing member onto the inner surface.

### [Present Invention 3]

The pneumatic tire according to Present Invention 1 or 2, wherein the plurality of grooves have cross-sectional shapes that are the same as each other, in a cross-section thereof perpendicular to the longitudinal direction of the groove.

### [Present Invention 4]

The pneumatic tire according to Present Invention 3, wherein
the plurality of land portions are firmly attached to the inner surface over widths that are equal to each other, in the cross-section, and
each of the widths is equal to a groove width of each of the plurality of grooves at the outer peripheral surface.

### [Present Invention 5]

The pneumatic tire according to any one of Present Inventions 1 to 4, wherein
each of the plurality of grooves has a pair of groove walls, and
each of the pair of groove walls has a wall surface perpendicular to the outer peripheral surface.

### [Present Invention 6]

The pneumatic tire according to Present Invention 5, wherein a chamfered portion is formed at each of corner portions between the wall surfaces and the outer peripheral surface.

### [Present Invention 7]

The pneumatic tire according to any one of Present Inventions 1 to 6, wherein each of the plurality of grooves has a groove width of 3 to 10 mm at the outer peripheral surface and a groove depth of 1 to 10 mm.

### [Present Invention 8]

The pneumatic tire according to any one of Present Inventions 1 to 7, wherein each of the plurality of grooves extends at an angle of 1 to 90° with respect to a tire circumferential direction.

### [Present Invention 9]

The pneumatic tire according to any one of Present Inventions 1 to 7, wherein each of the plurality of grooves extends in parallel to a tire circumferential direction.

### [Present Invention 10]

The pneumatic tire according to any one of Present Inventions 1 to 9, wherein
the sound absorbing member has a pair of end surfaces in the tire circumferential direction, and
a space is formed between the pair of end surfaces.

### [Present Invention 11]

The pneumatic tire according to Present Invention 10, wherein at least one of the pair of end surfaces has a tapered surface whose height in the tire radial direction gradually becomes smaller.

## Claims

1. A pneumatic tire (1) comprising a tread portion (2), wherein
a sponge-like sound absorbing member (9, 19, 29, 39, 49) is provided on an inner surface (2b) of the tread portion (2),
the sound absorbing member (9, 19, 29, 39, 49) has an outer peripheral surface (9a, 19a, 29a, 39a, 49a) facing outward in a tire radial direction,
a plurality of grooves (10, 40), and a plurality of land portions (11, 41) separated from each other by the plurality of grooves (10, 40), are formed in the outer peripheral surface (9a, 19a, 29a, 39a, 49a), and
each of the plurality of land portions (11, 41) is firmly attached to the inner surface (2b) continuously along a longitudinal direction of the groove (10, 40).

2. The pneumatic tire (1) according to claim 1, wherein an attached area of the plurality of land portions (11, 41) to the inner surface (2b) is 25% to 50% of a projected area of the sound absorbing member (9, 19, 29, 39, 49) onto the inner surface (2b).

3. The pneumatic tire (1) according to claim 1 or 2, wherein the plurality of grooves (10, 40) have cross-sectional shapes that are the same as each other, in a cross-section thereof perpendicular to the longitudinal direction of the groove (10, 40).

4. The pneumatic tire (1) according to claim 3, wherein
the plurality of land portions (11) are firmly attached to the inner surface (2b) over widths (w2) that are equal to each other, in the cross-section, and
each of the widths (w2) is equal to a groove width (w1) of each of the plurality of grooves (10) at the outer peripheral surface (9a, 19a, 29a, 49a).

5. The pneumatic tire (1) according to claim 1 or 2, wherein
each of the plurality of grooves (10) has a pair of groove walls (10a), and
each of the pair of groove walls (10a) has a wall surface (10b) perpendicular to the outer peripheral surface (9a, 19a, 29a, 49a).

6. The pneumatic tire (1) according to claim 5, wherein a chamfered portion (12) is formed at each of corner portions between the wall surfaces (10b) and the outer peripheral surface (9a, 19a, 29a, 49a).

7. The pneumatic tire (1) according to claim 1 or 2, wherein each of the plurality of grooves (10, 40) has a groove width (w1) of 3 to 10 mm at the outer peripheral surface (9a, 19a, 29a, 39a, 49a) and a groove depth (d) of 1 to 10 mm.

8. The pneumatic tire (1) according to claim 1 or 2, wherein each of the plurality of grooves (10, 40) extends at an angle of 1 to 90° with respect to a tire circumferential direction.

9. The pneumatic tire (1) according to claim 1 or 2, wherein each of the plurality of grooves (10, 40) extends in parallel to a tire circumferential direction.

10. The pneumatic tire (1) according to claim 9, wherein
the sound absorbing member (9, 19, 29, 39, 49) has a pair of end surfaces (9c) in the tire circumferential direction, and
a space (L) is formed between the pair of end surfaces (9c).

11. The pneumatic tire (1) according to claim 10, wherein at least one of the pair of end surfaces (9c) has a tapered surface (9d) whose height in the tire radial direction gradually becomes smaller.
